# EUROPÄISCHE PATENTSCHRIFT

(11) **EP 0 919 018 B1**
(45) Veröffentlichungstag und Bekanntmachung des Hinweises auf die Patenterteilung: **10.05.2000**
(21) Anmeldenummer: 97918896.8
(22) Anmeldetag: 18.08.1997
(51) Int. Cl.: G05B 19/404, G05B 19/416

(54) **VERFAHREN ZUM BERÜHRUNGSLOSEN ANFAHREN DER UNTEREN ANSCHLAGSPOSITION EINER FREMDKRAFTBETÄTIGTEN FENSTERSCHEIBE EINES KRAFTFAHRZEUGS**
METHOD FOR THE CONTACTLESS APPROACH OF THE LOWER STOP POSITION OF A MOTOR VEHICLE WINDOW OPERATED BY EXTRANEOUS FORCE
PROCEDE POUR L'APPROCHE SANS CONTACT DE LA POSITION DE BUTEE INFERIEURE D'UNE VITRE DE VEHICULE AUTOMOBILE ACTIONNEE PAR UNE FORCE EXTERIEURE

(30) Priorität: 16.08.1996 DE 19632910
(43) Veröffentlichungstag der Anmeldung: 02.06.1999
(73) Patentinhaber: Brose Fahrzeugteile GmbH & Co. KG Coburg, 96450 Coburg (DE)
(72) Erfinder: ÜBELEIN, Jörg, D-96271 Grub (DE); KALB, Roland, D-96269 Rossach (DE)
(74) Vertreter: Baumgärtel, Gunnar
(86) Internationale Anmeldenummer: DE9701822
(87) Internationale Veröffentlichungsnummer: WO9808148

(56) Entgegenhaltungen:
- EP-A- 0 270 837
- EP-A- 0 331 142
- DE-A- 19 514 954
- PATENT ABSTRACTS OF JAPAN vol. 012, no. 345 (P-759), 16.September 1988 & JP 63 101912 A (MUTOH IND LTD.), 6.Mai 1988,
- PATENT ABSTRACTS OF JAPAN vol. 008, no. 147 (P-285), 10.Juli 1984 & JP 59 045515 A (HITACHI SEISAKUSHO KK), 14.März 1984,

## Beschreibung

Die Erfindung betrifft ein Verfahren zum berührungslosen Anfahren der unteren Anschlagsposition einer fremdkraftbetätigten Fensterscheibe eines Kraftfahrzeugs gemäß dem Oberbegriff des Patentanspruchs 1. Sie gewährleistet, daß auch bei veränderten Einflußgrößen, wie z.B. abweichende Betriebsspannung, veränderte Reibverhältnisse, Alterung des technischen Systems, eine berührungslose Anschlagsposition erreicht und gehalten wird, ohne den an sich zur Verfügung stehenden Scheibenhub nennenswert einzuschränken. Das Verfahren ist auch in der Lage, relevante Toleranzen der Fahrzeugtüre, der Fensterhebermechanik und des Motors (Abweichungen in der Motorkennlinie) auszugleichen.

Gemäß üblicher Konstruktionsanforderungen soll in der untersten Position einer absenkbaren Fensterscheibe die Scheibenoberkante möglichst nicht mehr aus dem Fensterschacht der Karosserie herausstehen. Dies erfordert im allgemeinen eine Absenkung der Fensterscheibe bis in die unmittelbare Nähe des unteren mechanischen Anschlags. Das berührungslose Anfahren des unteren Anschlags, auch "Soft-Stopp" genannt, hat den Vorteil, daß die sonst üblichen, mit dem Auftreffen auf den Anschlag verbundenen Geräusche vermieden werden. Außerdem wird das Fensterhebersystem weniger stark belastet, was eine gewichtssparende Dimensionierung zuläßt.

Bekannt sind Verfahren zum berührungslosen Absenken einer Fensterscheibe eines Kraftfahrzeugs in Ihren unteren Endlagen unter Auswertung von Sensorsignalen eines motorischen Antriebs, die einer elektronischen Auswerteinheit zugeführt werden. Die elektronische Auswerteinheit nutzt die Sensorsignale als Zählimpulse, wobei jedem Summenwert eine bestimmte Scheibenposition zugeordnet ist. Um beim Absenken der Scheibe eine Kollision mit dem unteren mechanischen Anschlag zu vermeiden, ist es im allgemeinen wegen des Nachlaufverhaltens des Verstellsystems, wobei sich die Fensterscheibe auch noch nach dem Abschalten des Antriebs etwas absenkt, notwendig, die Abschaltung schon vor dem Erreichen der unteren Soll-Position vorzunehmen.

Aufgrund der fertigungsbedingten Toleranzen muß bei der Festlegung des elektronisch ansteuerbaren Hubes vom kürzesten der möglicherweise zur Verfügung stehenden Verstellwege ausgegangen werden, da anderenfalls Kollisionsgefahr mit dem unteren Anschlag besteht. Somit wird der tatsächlich verfügbare Hub nicht ausgenutzt. Ein zu kurz bemessener Abstand vom unteren Anschlag kann während der Fahrt infolge weiterer Absenkbewegungen, z.B. infolge von Schwingungen oder Stößen, zu schlagenden Geräuschen führen.

Die bekannten Lösung sind nicht in der Lage, veränderte Einflußfaktoren zu erkennen und auszugleichen. Dies trifft sowohl auf die durch Alterung des Systems zunehmenden Systemlosen als auch auf kurzfristig veränderbare Bedingungen zu, wie erhöhte bzw. erniedrigte Betriebsspannung oder durch Temperaturschwankungen und/oder Feuchtigkeitseinfluß veränderte Reibverhältnisse der Fensterscheibe. Bei vergrößerten Seillosen muß der Antrieb einen zunehmend größeren Stellweg zu deren Kompensation aufwenden, der zur Ausführung einer Scheibenbewegung nicht mehr zur Verfügung steht. D.h., die Gesamtzahl der den Scheibenhub zwischen oberer und unterer Endlage repräsentierende Zählimpulse (Signale) ist zu einem immer größer werdenden Teil Stellbewegungen des Antriebs zuzuordnen, die zu Verschiebebewegungen der Fensterscheibe führen. Somit ist die Fensterscheibe nicht mehr vollständig in den Schacht versenkbar.

Aus DE 195 14 954 A1 ist ein Verfahren zum Steuern der Bewegung von Fahrzeugfenstern bekannt, das die Fensterposition und bei Erreichen der Endlagen (wenn das Fenster völlig geschlossen oder völlig geöffnet ist) die Motorblockierung detektiert. Beim Anfahren der Endlagen werden die aktuellen Positionswerte mit früheren Positionswerten (vorangegangener Verstellzyklen) verglichen und bei Bedarf wird eine Anpassung der Hubbegrenzung durchgeführt. Damit wird das Anfahren der Endlagen ohne Nachbestromung möglich, jedoch werden die Merkmale des Blockierzustandes, insbesondere die hohe Systemverspannung, dadurch nicht positiv beeinflußt. Eine Minimierung der Verspannung des Fensterhebers kann hierdurch nicht erreicht werden.

Andererseits beeinflussen die Reibungsverhältnisse und die von der Betriebsspannung sowie der Motorkennlinie (die von Motor zu Motor stark differieren kann) abhängige Verstellgeschwindigkeit der Fensterscheibe das Nachlaufverhalten beträchtlich. Deshalb können die jeweils erreichbaren untersten Scheibenpositionen voneinander verschieden sein.

Zur Kompensation von Fehlern beim Zählen der generierten Sensorimpulse ist eine sogenannte Nachnormierung des Zählerstandes bei Erreichen der oberen Schließposition bekannt. Solche Zählfehler können auftreten, wenn Signale eines Nachlaufweges nach Motorabschaltung nicht mehr erkannt werden.

Die DE 195 36 207 A1 und die WO 97/12108 beschreiben Steuervorrichtungen, die dem berührungslosen Anfahren von Endpositionen eines motorbetätigten Verstellobjekts unter Ausnutzung der Trägheitsbewegung dienen. Zu diesem Zweck wird der Antriebsmotor an einer Position vor Erreichen seiner Endposition abgeschaltet, die möglichst exakt dem trägheitsbedingten Nachlaufweg des Verstellobjekts entspricht.

Eine wesentliche Anforderung beim berührungslosen Anfahren der Endposition besteht darin, daß das Verstellobjekt nur unwesentlich vor der Anschlagposition anhalten oder den Anschlag nur "soft" berühren darf. Dies erfordert eine außergewöhnlich genaue Kenntnis der Position und des Bewegungszustands des Verstellobjekts. Deshalb müssen zur Vorausberechnung des Nachlaufweges alle wesentlichen Einflußfaktoren, einschließlich der Phase der Kompensation der Systemlosen, berücksichtigt werden.

Der Erfindung liegt die Aufgabe zugrunde, ein Verfahren zum berührungslosen Anfahren der unteren Anschlagposition einer fremdkraftbetätigten Fensterscheibe eines Kraftfahrzeugs zu entwickeln, das veränderte Einflußgrößen, wie Alterung des technischen Systems, schwankende Reibungsbedingungen der Fensterscheibe, Streuungen der Motorkennlinie und Schwankungen der Bordspannung, aber auch den Grad der elastischen Verspannung des Verstellsystems und das damit verbundene Maß der Kompensation der sogenannten Systemlose, mit einfachen Mitteln selbsttätig kompensiert, wobei der konstruktiv verfügbare Hub weitestgehend ausgenutzt wird. Eine Kollision mit dem unteren Anschlag soll bei Bedarf ebenfalls sicher vermeidbar sein.

Erfindungsgemäß wird die Aufgabe durch die Merkmale des Anspruchs 1 gelöst. Die Unteransprüche geben vorteilhafte Ausgestaltungen der Erfindung an.

Demnach gelten die Systemlosen der Fensterhebermechanik als kompensiert, wenn ein Grenzwert einer den Systemzustand widerspiegelnden Meßgröße überschritten oder unterschritten wird.

Zusätzlich zur Absenkgeschwindigkeit der Fensterscheibe wird zur Bestimmung des zu erwartenden Nachlaufwegs der Fensterscheibe die Betriebsspannung des Antriebs verwendet, um den spätest möglichen Abschaltpunkt für den Antrieb zu ermitteln. D.h., unter Berücksichtigung des Scheibennachlaufs soll der Abschaltpunkt gefunden werden, der gerade noch ein Auflaufen auf den mechanischen Anschlag sicher verhindert. Das Nachlaufverhalten wird unter anderem vom Nachlaufen des Antriebsaggregates, den Massenträgheitskräften der bewegten Teile, insbesondere der Fensterscheibe, und den Reibungsbedingungen in den Scheibenführungen beeinflußt. Beim Erreichen des Abschaltpunktes, also der Scheibenposition, die um den Betrag des Nachlaufweges vor der Position des festgelegten berührungslosen unteren Anschlags liegt, wird die Ansteuerung des Fensterheberantriebs gestoppt. Zur Sicherung dieser Position kann bei Bedarf der Fensterheberantrieb solange automatisch in Richtung Heben angesteuert werden, bis die durch die Verstellung der Fensterscheibe in die vorangegangene Bewegungsrichtung verursachten Systemlosen der Verstellmechanik kompensiert sind. Dadurch wird der Hebermechanismus in Richtung Heben verspannt und die Scheibenposition gegen ein unbeabsichtigtes Absenken, z.B. infolge von Stößen oder Schwingungen, gesichert.

Der Nachlaufweg kann im gesamten Bereich tatsächlicher Scheibenbewegung fortlaufend berechnet werden; zumindest aber nach dem Unterschreiten einer festzulegenden unteren Zwischenposition der Fensterscheibe ist dies erforderlich. Vorzugsweise wird auf der Basis mehrerer Berechnungswerte des Nachlaufweges eine Trendberechnung des Abschaltpunkts des Antriebes durchgeführt.

Für die Berechnung des Nachlaufweges kann keine allgemeingültige mathematische Beziehung angegeben werden, da die Summe aller Einflußgrößen sehr groß und ihre Abhängigkeiten untereinander sehr komplex sind. Deshalb ist eine auf den jeweiligen Einsatzfall ausgerichtete empirische Untersuchung durchzuführen, die unter Berücksichtigung der wesentlichen Einflußgrößen zu einem Vorhersagemodell führt. Dazu variiert man bspw. die Betriebsspannung, setzt Motoren mit unterschiedlichen Kennlinien ein und simuliert verschiedene Klimabedingungen durch Variation von Temperatur und Feuchtigkeit. Die daraus resultierenden unterschiedlichen Verschiebegeschwindigkeiten können bspw. in Verknüpfung mit Meßwerten der Temperatur und der Betriebsspannung zu einem Wertefeld (Matrix) führen, das mit hinreichend guter Zuverlässigkeit eine Vorausberechnung des Nachlaufweges erlaubt.

Zur Beurteilung des Systemzustandes, d. h. ob eine Systemlose vorliegt oder nicht, wird vorzugsweise als Meßgröße die Periodendauer einer Antriebswelle (z.B. Motorwelle) oder die Stromaufnahme des elektrischen Antriebs herangezogen. Die Periodendauer läßt sich in einfacher Weise durch Auswertung von Hall-Signalen, die an einem Hall-Element von einem auf der Antriebswelle befestigten Magneten generiert werden, ermitteln. Solange eine Systemlose vorliegt, dreht der Motor schneller und nahe seiner Leerlaufdrehzahl, was mit einer vergleichsweise kleinen Periodendauer verbunden ist. Unter Last, also nach der Kompensation der Systemlosen, bremst der Motor ab und die Periodendauer verlängert sich adäquat. Da sich der Zustand eines Elektromotors über die Stromaufnahme sehr gut beurteilen läßt, ist auch die Stromstärke als Meßgröße gut geeignet. Je schneller der Motor dreht, desto geringer ist seine Stromaufnahme.

Um den Grenzbereich zwischen Antriebsbewegungen, die eine Systemlose kompensieren, und Antriebsbewegungen, die eine Verstellung der Fensterscheibe bewirken, auch bei sich verändernden Einflußfaktoren (z. B. Absinken der Bordspannung) hinreichend scharf detektieren zu können, wird das Abschaltkriterium (Grenzwert) auf der Basis wenigstens eines vorangegangenen Meßwertes generiert. Ein elektronischer Filter sorgt dafür, daß nicht jede beliebig kleine Veränderung des Meßwertes zum Abschalten des Antriebs führt. Erst wenn der zu bewertende Meßwert um einen festgelegten absoluten oder relativen (prozentualen) Betrag vom Vergleichswert abweicht, kommt es zur Generierung des Abschaltsignals.

Ein Ausführungsbeispiel der Erfindung wird nachfolgend anhand der Zeichnungen näher erläutert. Es zeigen:
- Figur 1 -: schematischer Kurvenverlauf einer Scheibenabsenkung aus der Schließposition in die untere berührungslose Anschlagsposition im T-t-Diagramm, wobei T die Periodendauer einer Antriebswelle, insbesondere einer Motorwelle, und t die Zeit ist;
- Figur 2 -: schematisch dargestellter vergleichender Verlauf der Scheibenposition und der Position des Antriebs (Motors) während der Schließposition in die untere berührungslose Anschlagsposition.

Das vorliegende Ausführungsbeispiel geht von einer vollkommen geschlossenen Fensterscheibe aus, deren Oberkante von der Fensterhebervorrichtung in den Dichtungsbereich gedrückt ist; die Fensterscheibe befindet sich in Ruhe. Zum Zeitpunkt t₁ wird der Antrieb des Fensterhebers in Richtung Senken aktiviert.

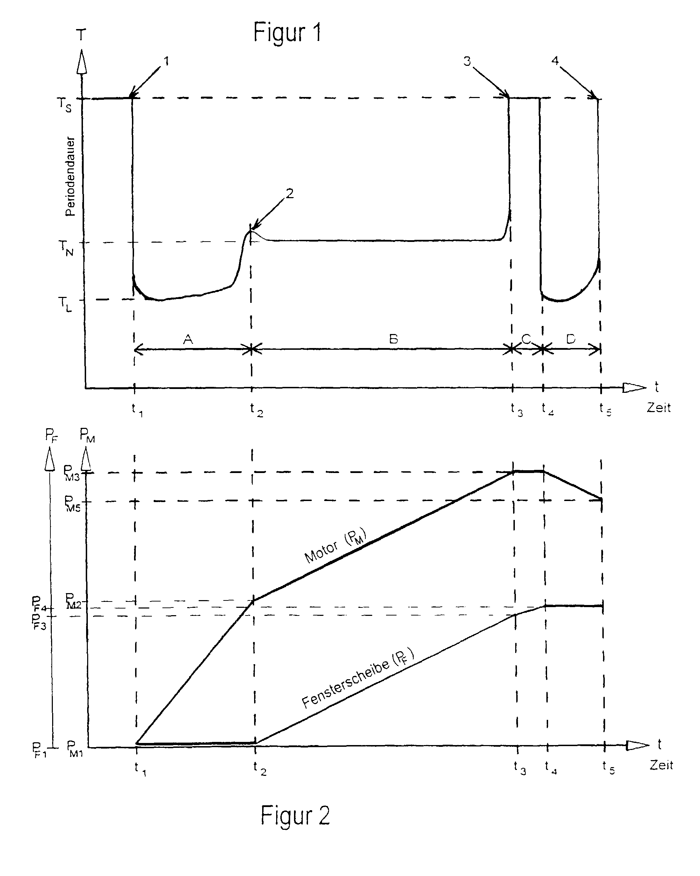

Da diese in Richtung Senken angesteuerte Antriebsbewegung gegenüber der vorangegangenen Hubbewegung, die zum Schließen der Fensterscheibe führte, eine Drehrichtungsumkehr darstellt, liegt im Fensterhebermechanismus eine vergleichsweise große Systemlose vor. Deshalb ist mit dem Startpunkt 1 (siehe Figur 1 ) des Antriebs in Richtung Senken nicht unmittelbar eine Scheibenabsenkung verbunden. In einer ersten Phase der Antriebsbewegung (Bereich A) wird zunächst die Systemlose kompensiert. Dies zeigt auch Figur 2 mit dem ansteigenden Verlauf der Kurve des Antriebs (Anstieg des Motorpositionszählerstandes P_{M}; obere Kurve) im Bereich A zwischen t₁ und t₂ von der Position P_{M1} zu P_{M2}, während die Fensterscheibe im selben Bereich A in ihrer Schließposition P_{F1} verharrt.

Aufgrund des fehlenden mechanischen Widerstandes beschleunigt der Antrieb in kürzester Zeit etwa auf seine Leerlaufdrehzahl, der die Leerlauf-Periodendauer T entspricht. Kurz vor dem Erreichen des Zeitpunktes t₂ ist die Systemlose kompensiert und die Fensterhebermechanik beginnt sich wieder zu verspannen, zunächst jedoch, ohne eine Scheibenbewegung hervorzurufen. Punkt 2 kennzeichnet ein lokales Maximum eines typischen Kurvenverlaufs, das den Übergang zwischen Haftreibung und Gleitreibung der zubewegenden Fensterscheibe und somit den Beginn der Scheibenabsenkung darstellt. Sämtliche bis dahin vom Antrieb oder einer Antriebswelle generierten Bewegungssignale werden der Systemlosen zugeordnet. Erst die Signale des Bereichs B sind mit einer Scheibenbewegung verbunden und werden entsprechend gewertet. In diesem Bereich führt jede Antriebsbewegung zu einer entsprechenden Verschiebung der Fensterscheibe. Infolge der Veränderung der Motorposition von P_{M2} zu P_{M3} wird die Fensterscheibe von der Position P_{F1} zur Position P_{F3} abgesenkt. Der Antrieb pegelt sich auf seine Nenndrehzahl mit der Periodendauer T_{N} ein.

Die Antriebsbewegung wird zum Zeitpunkt t₃ gestoppt, wenn aufgrund des im Bereich B berechneten Nachlaufweges der Scheibenabsenkung ein Auflaufen auf den unteren Anschlag droht. Aufgrund der eingangs erläuterten Bedingungen kommt es zu einer weiteren Absenkung der Fensterscheibe, so daß die Fensterscheibe im Bereich C ihren Verschiebeweg von P_{F3} zu P_{F4} fortsetzt, während der Antrieb in der Position P_{M3} stehen bleibt.

Um die Scheibenposition gegen weiteres Absenken zu sichern, veranlaßt die Steuerelektronik zum Zeitpunkt t₄ eine Drehrichtungsumkehr, die die Systemlose, verursacht durch die vorangegangene Absenkbewegung, kompensiert. Dies geschieht nach dem gleichen Prinzip, wie bereits beschrieben zur Kompensation der Systemlosen in Richtung Senken. Dabei wird die Position P_{M3} des Antriebs auf die Position P_{M5} zurückgeführt; die Fensterscheibe hingegen verbleibt in ihrer Position P_{F4}. Mit dem Abschalten des Antriebs im Punkt 4 sind die Systemlosen des Bereichs D vollständig kompensiert und die Fensterscheibe steht in Richtung Heben unter mechanischer Spannung.

Um den Zeitpunkt t₂, der den Bereich A der Systemlosenkompensation vom Bereich B echter Scheibenbewegung trennt, hinreichend exakt ermitteln zu können, muß ein Grenzwert des den Systemzustand beschreibenden Meßwerts definiert werden. Zweckmäßigerweise wird der Grenzwert auf der Basis mindestens eines vorher ermittelten Meßwertes berechnet, um sämtliche das System beeinflussende Größen (Temperatur, Feuchtigkeit, Alterung, Bordspannung) mit zu erfassen. Durch einen in der Elektronikeinheit abgelegten Algorithmus wird festgelegt, um welchen absoluten oder relativen Betrag der nächste Meßwert abweichen darf. Bei Über- bzw. Unterschreitung dieses Wertes gelten die Systemlosen als kompensiert.

### Bezugszeichenliste

- 1: Startpunkt in Richtung Senken ausgehend von der oberen Schließposition
- 2: Punkt des Übergangs von Haftreibung zu Gleitreibung
- 3: Punkt der Antriebsabschaltung und des Beginns des Nachlaufens der Scheibe
- 4: Punkt der Antriebsabschaltung

- A: Bereich der Systemlosen in Richtung Senken
- B: Bereich der Scheibenabsenkung
- C: Bereich des Nachlaufens der Scheibe
- D: Bereich der Systemlosen in Richtung Heben

- P_{F}: Position der Fensterscheibe
- P_{F1}: Position der Fensterscheibe in der oberen Schließlage der Fensterscheibe
- P_{F3}: Position der Fensterscheibe am Punkt der Antriebsabschaltung des Antriebs
- P_{F4}: Position der Fensterscheibe am Ende des Nachlaufbereichs
- P_{M}: Position des Antriebs (z.B. Anzahl der Motorumdrehungen)
- P_{M1}: Position des Antriebs in der oberen Schließlage der Fensterscheibe
- P_{M2}: Position des Antriebs bei gerade vollständiger Kompensation der Systemlosen in Richtung Senken
- P_{M3}: Position des Antriebs am Punkt der Antriebsabschaltung des Antriebs
- P_{M5}: Position des Antriebs am Punkt der Antriebsabschaltung nach Kompensation der Sysemlosen in Richtung Heben

- T: Periodendauer
- T_{L}: Periodendauer bei Leerlaufdrehzahl
- T_{N}: Periodendauer der Nenndrehzahl
- Tₛ: Periodendauer bei Motorstillstand
- t: Zeit
- t₁: Zeitpunkt der Aktivierung des Antriebs in Richtung Senken
- t₂: Zeitpunkt beginnender Scheibenabsenkung
- t₃: Zeitpunkt der Antriebsabschaltung
- t₄: Zeitpunkt der Drehrichtungsumkehr von Senken zu Heben

## Patentansprüche

1. Verfahren zum berührungslosen Anfahren der unteren Anschlagposition einer fremdkraftbetätigten Fensterscheibe eines Kraftfahrzeugs mittels eines Antriebs, wobei während des Absenkens der Fensterscheibe wegabhängige Sensorsignale generiert und an eine elektronische Auswerteeinheit weitergeleitet sowie gezählt werden, wobei während einer ersten Phase (A) der Stellbewegung des Antriebs eine Kompensation der Systemlosen der Fensterhebermechanik und in einer zweiten Phase (B) der Stellbewegung des Antriebs eine Scheibenabsenkung erfolgt und wobei beim Erreichen einer Scheibenposition, die um den Betrag des Nachlaufweges vor der Position des festgelegten berührungslosen Anschlages liegt, der Antrieb abgeschaltet wird,
**dadurch gekennzeichnet**,
daß beim Über- oder Unterschreiten eines Grenzwertes (2) einer den Systemzustand der Fensterhebermechanik widerspiegelnden Meßgröße die Systemlose der Fensterhebermechanik als kompensiert gilt,
daß die Sensorsignale während des Ansteuerns des Antriebs zum Zweck des Absenkens der Fensterscheibe in der ersten Phase (A) der Kompensation der Systemlosen und in der zweiten Phase (B) dem Weg der Scheibenabsenkung zugeordnet werden
und daß während der zweiten Phase (B) der Stellbewegung des Antriebs der zu erwartende Nachlaufweg der Fensterscheibe auf der Basis der Absenkgeschwindigkeit der Fensterscheibe und/oder der Betriebsspannung berechnet wird.

2. Verfahren nach Anspruch 1, **dadurch gekennzeichnet**, daß als Meßgröße die Periodendauer einer Antriebswelle, insbesondere des Elektromotors, und als Grenzwert zwischen der Phase (A) und der Phase (B) ein lokales Maximum (2) der Periodendauer verwendet wird.

3. Verfahren nach Anspruch 1, **dadurch gekennzeichnet**, daß als Meßgröße die Stromaufnahme des elektrischen Antriebs und als Grenzwert zwischen der Phase (A) und der Phase (B) ein lokales Maximum des elektrischen Stroms verwendet wird.

4. Verfahren nach einem der voranstehenden Ansprüche, **dadurch gekennzeichnet**, daß der Grenzwert aus wenigstens einem vorhergehend ermittelten Meßwert generiert wird, wobei der Grenzwert um einen festgelegten festen oder anteiligen Betrag vom letzten Meßwert abweicht.

5. Verfahren nach einem der voranstehenden Ansprüche, **dadurch gekennzeichnet,** daß der der Scheibenposition zugeordnete Zählerstand durch Anfahren der oberen Schließposition der Fensterscheibe bei der Inbetriebnahme des Fensterhebers und nach einer festgelegten Anzahl von Betätigungen des Fensterhebers erfolgt.

6. Verfahren nach einem der voranstehenden Ansprüche, **dadurch gekennzeichnet,** daß der Nachlaufweg zumindest nach dem Unterschreiten einer unteren Zwischenposition der Fensterscheibe fortlaufend berechnet wird.

7. Verfahren nach Anspruch 6, **dadurch gekennzeichnet**, daß auf der Basis einer mehrere Berechnungswerte des Nachlaufweges umfassenden Trendberechnung der Abschaltpunkt des Antriebs festgestellt wird.

8. Verfahren nach einem der voranstehenden Ansprüche, **dadurch gekennzeichnet,** daß der Fensterheberantrieb solange automatisch in Richtung Heben angesteuert wird, bis die durch die Verstellung der Fensterscheibe in die vorangegangene Bewegungsrichtung verursachte Systemlosen der Verstellmechanik kompensiert sind.

## Claims

1. Method for the contactless approach of the lower stop position of a motor vehicle window operated by extraneous force by means of a drive wherein as the window pane is lowered path-dependent sensor signals are generated and forwarded to an electronics evaluation unit for counting, wherein during a first phase (A) of the setting movement of the drive the system deficiencies of the window lift mechanism are compensated and during a second phase (B) of the setting movement of the drive the window pane is lowered and wherein on reaching a pane position which lies by the extent of the slowing-down path in front of the position of the fixed contactless stop, the drive is switched off,
characterised in that
on exceeding or understepping a boundary value (2) of a measured value reflecting the system state of the window lifter mechanism the system deficiencies of the window lifter mechanism are considered compensated,
that the sensor signals during the control of the drive for the purpose of lowering the window pane in the first phase (A) are associated with the compensation of the system deficiencies and in the second phase (B) are associated with the path of the lowering action of the window pane, and
that during the second phase (B) of the setting movement of the drive the anticipated slowing-down path of the window pane is calculated on the basis of the lowering speed of the window pane and/or on the operating voltage.

2. Method according to claim 1 characterised in that the periodic length of a drive shaft, more particularly of the electric motor, is used as the measured value and a local maximum (2) of the periodic length is used as the boundary value between the phase (A) and the phase (B).

3. Method according to claim 1 characterised in that the current collection of the electric drive is used as the measured value and a local maximum of the electric current is used as the boundary value between the phase (A) and the phase (B).

4. Method according to one of the preceding claims characterised in that the boundary value is generated from at least one previously determined measured value wherein the boundary value deviates from the last measured value by a determined fixed or proportionate amount.

5. Method according to one of the preceding claims characterised in that the counting state associated with the pane position is reached through the approach of the upper closing position of the window pane during operation of the window lifter and after a fixed number of operations of the window lifter.

6. Method according to one of the preceding claims characterised in that the slowing-down path is calculated continuously at least after understepping a lower intermediate position of the window pane.

7. Method according to claim 6 characterised in that the switch-off point for the drive is determined on the basis of a trend calculation comprising several calculation values of the slowing-down path.

8. Method according to one of the preceding claims characterised in that the window lifter drive is controlled automatically in the lifting direction until the system deficiencies of the displacement mechanism caused by the displacement of the window pane into the previous direction of movement are compensated.

## Revendications

1. Procédé d'approche sans contact de la position de butée inférieure d'une vitre de fenêtre, actionnée sous l'action d'une force extérieure, dans un véhicule automobile, au moyen d'un entraînement, dans lequel, pendant l'abaissement de la vitre de fenêtre, on génère des signaux de détection fonction de la course, on les transmet à une unité d'évaluation électronique et on les compte, de sorte qu'il se produit pendant une première phase (A) du déplacement de l'entraînement une compensation des jeux systématiques dans le mécanisme de lève-vitre, et pendant une deuxième phase (B) du déplacement de l'entraînement une descente de la vitre, et lorsqu'on atteint une position de la vitre située avant la position de la butée fixe sans contact d'un écart égal à la poursuite de course, on arrête l'entraînement,
caractérisé en ce que
lors du passage au-dessus ou au-dessous d'une valeur limite (2) d'une grandeur de mesure reproduisant l'état systématique du mécanisme de lève-vitre, on considère les jeux systématiques du mécanisme de lève-vitre comme étant compensés,
les signaux de détection pendant le pilotage de l'entraînement afin d'abaisser la vitre de fenêtre sont associés pendant la première phase (A) à la compensation des jeux systématiques, et pendant la deuxième phase (B) à la course de descente de la vitre, et
pendant la deuxième phase (B) du déplacement de l'entraînement, on calcule la poursuite de course attendue de la vitre de fenêtre en se basant sur la vitesse de descente de la vitre et/ou sur la tension de service.

2. Procédé selon la revendication 1, caractérisé en ce que l'on utilise comme grandeur de mesure la durée de la période d'un arbre d'entraînement, en particulier celui du moteur électrique, et en ce qu'on utilise comme valeur limite entre la phase (A) et la phase (B) un maximum local de la durée de la période.

3. Procédé selon la revendication 1, caractérisé en ce que l'on utilise comme grandeur de mesure la consommation de courant de l'entraînement électrique, et comme valeur limite entre la phase (A) et la phase (B) un maximum local du courant électrique.

4. Procédé selon l'une des revendications précédentes, caractérisé en ce que la valeur limite est engendrée à partir d'au moins une valeur de mesure déterminée au préalable, ladite valeur limite différant de la dernière valeur mesurée d'un écart fixe déterminé, ou d'un écart proportionnel.

5. Procédé selon l'une des revendications précédentes, caractérisé en ce que l'état de comptage associé à la position de la vitre a lieu par approche de la position de fermeture supérieure de la vitre de fenêtre lors de la mise en service du lève-vitre, et après un nombre fixé d'actionnements du lève-vitre.

6. Procédé selon l'une des revendications précédentes, caractérisé en ce que la poursuite de la course est calculée en continu, au moins après passage au-dessous d'une position intermédiaire inférieure de la vitre de fenêtre.

7. Procédé selon la revendication 6, caractérisé en ce que l'on détermine un calcul de tendance du point d'arrêt de l'entraînement en se basant sur une valeur de calcul parmi plusieurs de la poursuite de la course.

8. Procédé selon l'une des revendications précédentes, caractérisé en ce que l'entraînement de lève-vitre est piloté automatiquement en direction de la montée, aussi longtemps que l'on compense les jeux systématiques du mécanisme de déplacement qui sont provoqués par le déplacement de la vitre de fenêtre dans la direction de déplacement précédente.
